# FASCICULE DE BREVET EUROPEEN

(11) **EP 0 647 777 B1**
(45) Date de publication et mention de la délivrance du brevet: **16.04.1997**
(21) Numéro de dépôt: 94402206.0
(22) Date de dépôt: 04.10.1994
(51) Int. Cl.: F02K 1/62, F02K 1/12

(54) **Tuyère d'éjection de turboréacteur axisymétrique, convergente-divergente avec inversion de poussée**
Rotationssymmetrische konvergente/divergente Schubdüse mit Schubumkehrvorrichtung
Axis-symmetric, convergent/divergent exhaust nozzle with thrust reverser

(30) Priorité: 06.10.1993 FR 9311898
(43) Date de publication de la demande: 12.04.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Brossier, Pascal, F-77127 Lieusaint (FR); Pincemin, Jean-Marie, F-91560 Crosne (FR); Wurniesky, Pascal, F-77176 Savigny Le Temple (FR)

(56) Documents cités:
- FR-A- 2 096 538
- FR-A- 2 602 274
- FR-A- 2 617 910
- US-A- 3 420 442
- US-A- 3 601 340

## Description

La présente invention concerne une tuyère axisymétrique convergente-divergente pour turboréacteur d'aviation, ladite tuyère comportant une couronne extérieure de volets froids et une couronne intérieure de volets chauds, ladite couronne intérieure de volets chauds comprenant deux groupes de volets chauds dans le prolongement les uns des autres, les volets chauds amont de la couronne intérieure étant articulés à leur extrémité antérieure sur une partie terminale fixe du turboréacteur, les volets froids de la couronne extérieure étant articulés à leur extrémité antérieure sur une structure porteuse de capotage radialement distante de la partie terminale fixe.

Certains avions équipés de turboréacteurs doivent assurer des missions dans des conditions de vol subsonique ou supersonique. Dans ce cas, les turbomachines sont équipées d'un système de réchauffe et d'une tuyère à section variable, pouvant recevoir une conformation convergente-divergente convenant aux écoulements supersoniques, la section minimum de la tuyère étant en outre réglable en fonction du régime du moteur: section réduite en régime normal et section élargie pour la postcombustion.

L'état de la technique est illustré notamment par FR-A-1 225 736, FR-A-2 602 274 et FR-A-2 617 910. Mais aucun de ces documents ne concerne une tuyère d'éjection convergente-divergente munie d'une inversion de poussée.

Le but de la présente invention est de proposer une tuyère d'éjection du type mentionné ci-dessus qui comporte un dispositif d'inversion de poussée.

Le but est atteint selon l'invention par l'ensemble des dispositions suivantes:
- les volets chauds aval de la couronne intérieure sont répartis en deux premiers ensembles de volets diamétralement opposés et en deux seconds ensembles de volets intercalés entre lesdits premiers ensembles de volets ;
- les volets desdits premiers ensembles de volets sont portés au moyen d'une liaison articulée respectivement par deux supports latéraux fixes disposés entre la couronne intérieure et la couronne extérieure ;
- les volets desdits seconds ensembles de volets sont portés au moyen d'une liaison articulée par deux arceaux montés pivotants sur lesdits supports latéraux ;
- il est prévu en outre :
   a) des moyens pour maintenir l'extrémité antérieure des volets chauds aval au contact de l'extrémité arrière des volets chauds amont, en régime normal de fonctionnement du turboréacteur ;
   b) des moyens pour faire basculer ensemble vers l'arrière lesdits arceaux et les volets desdits seconds ensembles de volets afin de former un inverseur de poussée, les bords de fuite des volets desdits seconds ensembles de volets étant découpés de manière à permettre le contact desdits seconds ensembles de volets en position "inversion de poussée", et des ouvertures latérales d'échappement se formant entre les volets chauds amont et lesdits seconds ensembles de volets ;
- au moins les volets froids de la couronne extérieure situés en regard desdites ouvertures latérales sont effaçables dans la position "inversion de poussée".

Selon une première variante de réalisation, les volets froids effaçables de la couronne extérieure sont portés par lesdits arceaux et sont entraînés par ces derniers lors de leur basculement vers l'arrière.

Selon une deuxième variante de réalisation, les volets froids de la couronne extérieure sont articulés en amont sur un anneau monté coulissant, soit vers l'amont, soit vers l'aval, sur la structure porteuse de capotage.

D'autres caractéristiques et avantages de l'invention ressortiront à la lecture de la description suivante faite à titre d'exemple non limitatif et en référence aux dessins annexés dans lesquels :
la figure 1 est une représentation schématique, en coupe, de la tuyère convergente-divergente selon l'invention dans la position ouverture maximum, la section du col étant minimum,
la figure 2 représente schématiquement, en coupe, la tuyère de la figure 1 dans la position ouverture minimum, la section du col étant maximum,
la figure 3 est une coupe transversale selon la ligne III-III de la figure 1,
la figure 4 est une représentation schématique du montage des volets du divergent sur les arceaux,
la figure 5 est une vue latérale de la tuyère en position "inversion de poussée" selon un premier mode de réalisation, seule une partie des volets froids étant représentée par souci de clarté,
la figure 6 est une vue de l'arrière de la tuyère de la figure 5,
la figure 7 est une vue latérale de la tuyère en position "inversion de poussée", selon un deuxième mode de réalisation, les volets froids étant articulés sur un anneau coulissant vers l'avant,
la figure 8 est une vue de l'arrière de la tuyère de la figure 7,
la figure 9 est une vue latérale de la tuyère en position "inversion de poussée", selon un deuxième mode de réalisation, dans lequel les volets froids sont articulés sur un anneau coulissant vers l'arrière, seule une partie des volets froids étant représentée par souci de clarté, et
la figure 10 montre la tuyère de la figure 9 selon une vue en perspective.

La référence 2 représente la partie terminale fixe d'un turboréacteur d'axe 3, et la référence 4 représente la structure porteuse de capotage distante radialement de la partie terminale 2. Un flux d'air froid F1 circule dans l'espace annulaire délimité par la partie terminale 2 et la structure porteuse de capotage 4, tandis qu'un flux d'air chaud F2, issu de la turbine ou de la chambre de postcombustion, circule à l'intérieur de la partie terminale 2.

Une tuyère convergente-divergente 5 est disposée en amont de la partie terminale 2. Cette tuyère 5 comporte une couronne extérieure 6 de volets froids articulés, en fonctionnement normal du turboréacteur, par leur extrémité antérieur 7, sur la structure porteuse de capotage 4, et une couronne intérieure 8 de volets chauds qui comporte deux groupes 9, 10 de volets chauds disposés dans le prolongement les uns des autres.

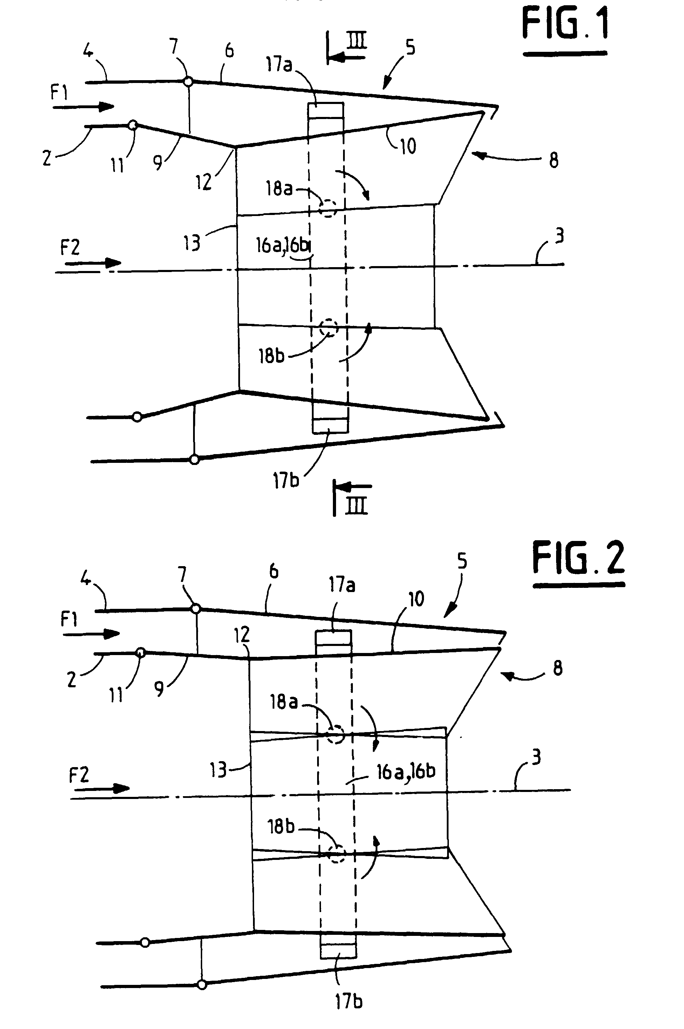

Les volets chauds du groupe 9 amont sont articulés à leur extrémité antérieure 11 sur la partie terminale 2, tandis que les volets chauds du groupe 10 aval sont adjacents aux volets du groupe 9, en fonctionnement normal du turboréacteur, par leur extrémité antérieure 12, à la jonction des volets des deux groupes 9, 10. Le groupe 9 amont constitue un ensemble de volets convergents tandis que le groupe 10 constitue un ensemble de volets divergents. La section du col 13 de la tuyère convergente-divergente peut varier entre une section minimum représentée sur la figure 1 et une section maximum représentée sur la figure 2.

Chaque couronne de volets ou groupe de volets comporte, de manière connue, des volets commandés par des dispositifs de commande non représentés sur le dessin et des volets suiveurs intercalaires. Ces dispositifs de commande et les circuits associés sont disposés dans l'espace annulaire délimité par la couronne extérieure 6 et la couronne intérieur 8 et dans lequel circule le flux d'air froid F1.

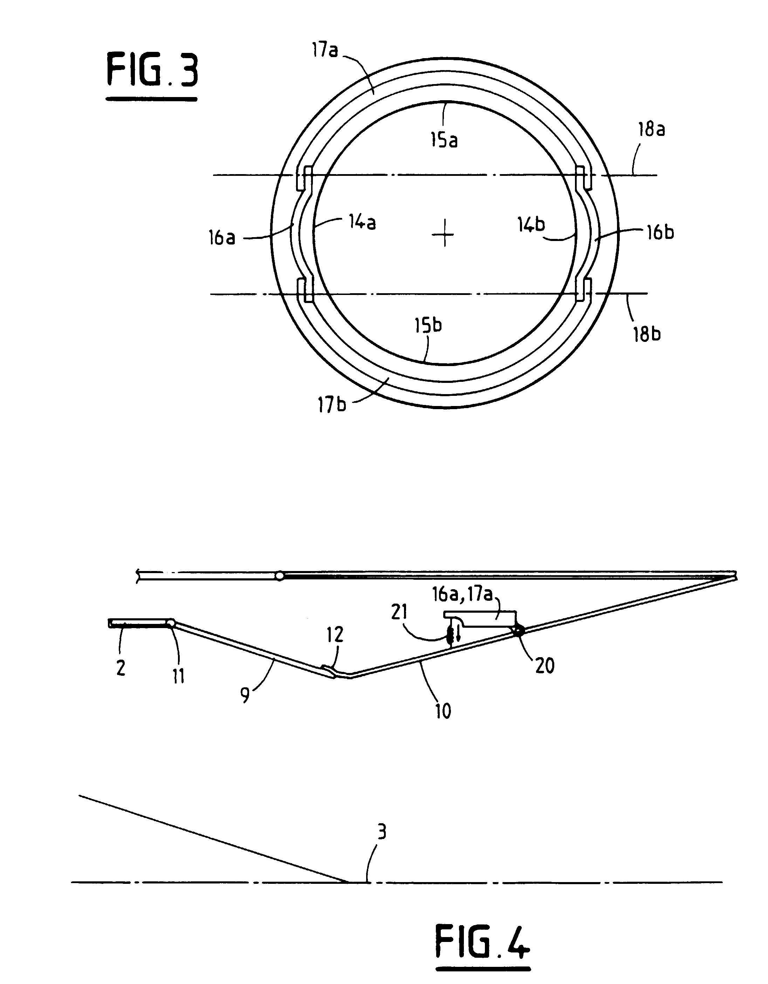

Selon la présente invention, les volets chauds du groupe aval 10, c'est-à-dire les volets du divergent, sont répartis en deux premiers ensembles de volets 14a, 14b diamétralement opposés et en deux seconds ensembles de volets 15a, 15b intercalés entre les premiers ensembles 14a, 14b, comme représenté sur les figures 3 et 4.

Les premiers ensembles 14a, 14b sont portés respectivement par deux supports latéraux fixes 16a, 16b, disposés entre la couronne extérieure 6 et le groupe aval 10 de volets et reliés à la partie terminale 2 par des longerons non représentés sur le dessin. Les volets 14a, 14b sont articulés sur les supports 16a, 16b par l'intermédiaire d'axes 20.

Deux arceaux 17a, 17b sont articulés aux extrémités des supports latéraux 16a,16b de telle manière qu'ils puissent pivoter autour d'axes 18a, 18b, transversaux et parallèles.

Les seconds ensembles de volets 15a, 15b sont portés respectivement par les deux arceaux 17a, 17b, par l'intermédiaire d'un axe 20 formant une liaison articulée.

Ainsi le support latéral fixe 16a porte le premier ensemble de volets 14a, le support latéral fixe 16b porte le deuxième ensemble de volet 14b, l'arceau 17a porte le premier ensemble de volets 15a, et l'arceau 17b porte le second ensemble de volets 15b, les volets étant articulés sur les supports et les arceaux, respectivement.

Le montage de chacun desdits ensembles de volets sur le support latéral ou l'arceau correspondant est réalisé de telle manière, qu'en fonctionnement normal du turboréacteur, l'extrémité antérieure 12 de ces volets reste en appui sur la face extérieure de l'extrémité arrière des volets amont, quelle que soit la section du col 13 et quel que soit l'angle du divergent 10. Ces moyens de montage peuvert comporter par exemple des moyens élastiques 21 qui sont prévus pour mettre en appui l'extrémité antérieure 12 du divergent 10 sur la face postérieure du convergent 9.

Sous l'action de dispositifs de commande, non représentés sur les dessins, les arceaux 17a, 17b pivotent autour des axes 18a, 18b et basculent vers l'arrière de la tuyère 1. Ils entraînent dans leur mouvement les volets des seconds ensembles de volets 15a, 15b jusqu'à ce que leurs bords de fuite 22a, 22b qui sont découpés en conséquence, viennent en contact. Des ouvertures 23a, 23b se forment entre les volets chauds du convergent 9 et les seconds ensembles de volets 15a, 15b.

Dans cette position, les seconds ensembles de volets 15a, 15b retiennent presque totalement le flux F2 des gaz chauds et le dévie vers l'avant, c'est-à-dire vers les ouvertures 23a, 23b. Ils constituent ainsi un inverseur de poussée.

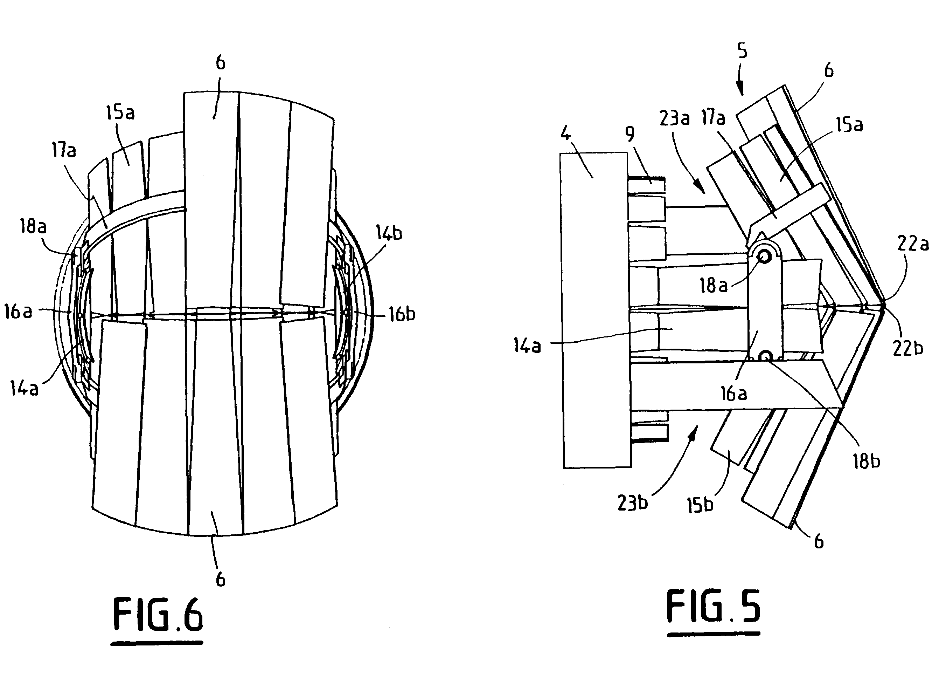

Afin de protéger les volets froids de la couronne extérieure 6, il est prévu qu'au moins les volets froids disposés en regard des volets des seconds ensembles de volets 15a, 15b s'effacent devant les ouvertures 23a, 23b par lesquelles s'échappent le flux F2 de gaz chauds.
Selon un premier mode de réalisation, représenté sur les figures 5 et 6, les volets froids de la couronne extérieure 6 sont répartis, comme les volets du divergent 10, en deux premières parties portées par les supports latéraux 14a, 14b et en deux secondes parties portées par les arceaux 17a, 17b et entraînées par ces derniers lors de leur basculement vers l'arrière.

Dans la position "inversion de poussée", les volets des seconds ensembles de volets 15a, 15b protègent les volets froids des secondes parties de la chaleur dégagée par le flux chaud F2.

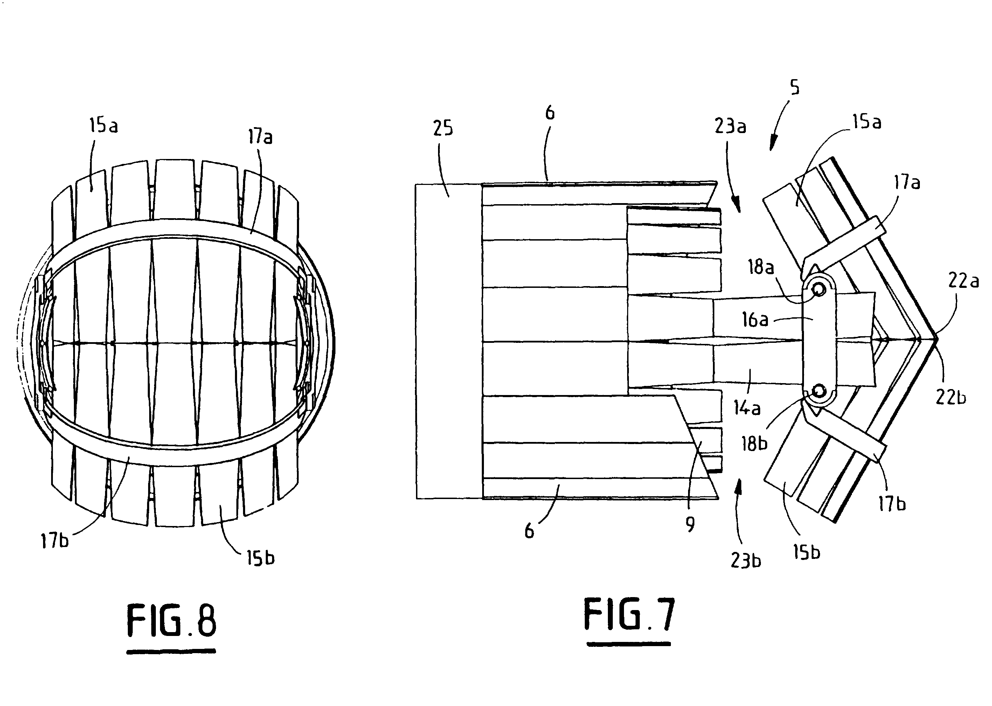

Selon un deuxième mode de réalisation, représenté sur les figures 7 à 10, les volets froids de la couronne extérieure 6 sont articulés à leur extrémité antérieure 7 sur un anneau 25 monté coulissant sur la structure porteuse de capotage 4.

Dans la variante de réalisation représentée sur les figures 7 et 8, l'anneau 25 coulisse suffisamment vers l'avant pour que les volets froids de la couronne 6 s'effacent complètement devant les volets du divergent 10 pour autoriser le passage du flux chaud F2 par les ouvertures d'échappement 23a, 23b.

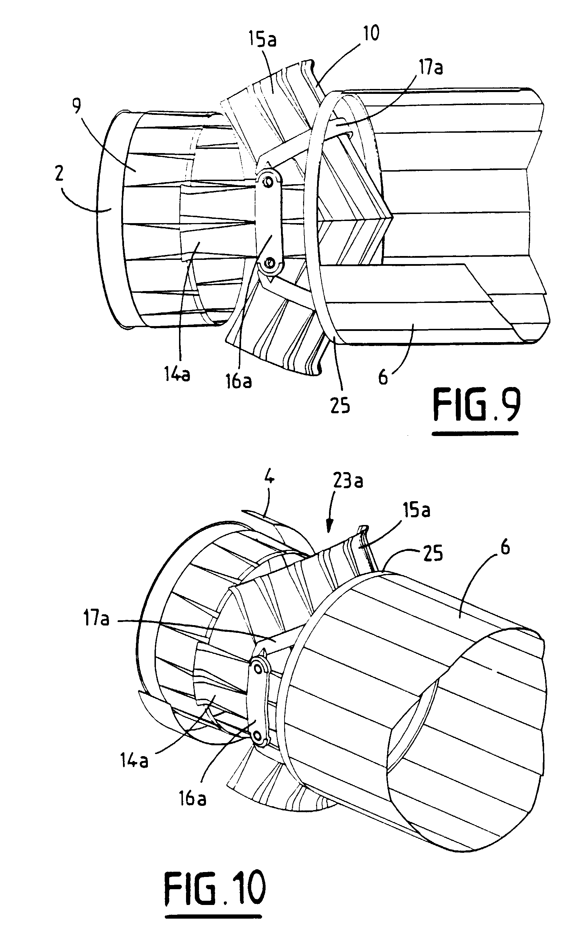

Dans la variante de réalisation représentée sur les figures 9 et 10, l'anneau 25 coulisse au contraire vers l'arrière par rapport à la structure porteuse de capotage 4. Le recul doit être suffisant pour que les volets froids soient à l'abri du flux F2 de gaz chauds.

Lorsque les arceaux 17a, 17b basculent vers l'arrière, les volets des premiers ensembles de volets 14a, 14b restent dans leur position initiale, puisqu'ils sont solidaires des supports latéraux fixes 16a, 16b et ils créent une barrière qui évite les fuites latérales du flux F2 de gaz chauds.

Naturellement il est nécessaire de prévoir une découpe du bord de fuite 22a, 22b des volets du divergent 10 pour permettre le contact de tous les volets en position "inversion de poussée". Les volets des premiers ensembles 14a, 14b peuvent être raccourcis afin d'assurer la continuité de la découpe du bord de fuite du convergent 10 et faciliter le basculement des volets des seconds ensembles de volets 15a, 15b. Les volets froids de la couronne extérieure 6 subissent la même découpe que les volets du divergent 10 pour ne pas être endommagés par le flux F2 de gaz chauds.

Les avantages de l'invention sont les suivants :
- l'orientation angulaire de l'inverseur de poussée n'est pas imposée par la cinématique du système. On peut fixer l'éjection du flux de gaz, c'est-à-dire les ouvertures d'échappement 23a, 23b, vers le haut et vers la bas. Mais elle peut aussi s'effectuer sur les côtés ou dans des positions angulaires diamétralement opposées,
- le dispositif d'inversion du sens de la poussée est géométriquement compris dans le maître de couple du moteur,
- le système d'inversion de poussée n'est pas engageant en ouverture.

## Revendications

1. Tuyère axisymétrique convergente-divergente pour turboréacteur d'aviation, ladite tuyère comportant une couronne extérieure (6) de volets froids et une couronne intérieure (8) de volets chauds, ladite couronne intérieure (8) de volets chauds comprenant deux groupes (9, 10) de volets chauds dans le prolongement les uns des autres, les volets chauds amont de la couronne intérieure étant articulés à leur extrémité antérieure (11) sur une partie terminale fixe (2) du turboréacteur, les volets froids de la couronne extérieure (6) étant articulés à leur extrémité antérieure sur une structure porteuse de capotage (4) radialement distante de la partie terminale fixe (2), caractérisée
en ce que les volets chauds aval (10) de la couronne intérieure (8) sont répartis en deux premiers ensembles de volets (14a, 14b) diamétralement opposés et en deux seconds ensembles de volets (15a, 15b) intercalés entre lesdits premiers ensembles de volets (14a, 14b),
en ce que les volets desdits premiers ensembles de volets (14a, 14b) sont portés au moyen d'une liaison articulée (20) respectivement par deux supports latéraux fixes (16a, 16b) disposés entre la couronne intérieure (8) et la couronne extérieure (6),
en ce que les volets desdits seconds ensembles de volets (15a, 15b) sont portés au moyen d'une liaison articulée (20) par deux arceaux (17a, 17b) montés pivotants sur lesdits supports latéraux (16a, 16b),
en ce qu'il est prévu, en outre,
a) des moyens pour maintenir l'extrémité antérieure (12) des volets chauds aval (10) au contact de l'extrémité arrière des volets chauds amont (9), en régime normal de fonctionnement du turboréacteur,
b) des moyens pour faire basculer ensemble vers l'arrière lesdits arceaux (17a, 17b) et les volets desdits seconds ensembles de volets (15a, 15b) afin de former un inverseur de poussée, les bords de fuite (22a, 22b) des volets desdits seconds ensembles de volets (15a, 15b) étant découpés de manière à permettre le contact desdits seconds ensembles de volets (15a, 15b) en position "inversion de poussée" et des ouvertures latérales (23a, 23b) d'échappement se formant entre les volets chauds amont (9) et lesdits seconds ensembles de volets (15a, 15b), et
en ce qu'au moins les volets froids de la couronne extérieure (6) situés en regard desdites ouvertures (23a, 23b) sont effaçables dans la position "inversion de poussée".

2. Tuyère selon la revendication 1, caractérisée en ce que les volets froids effaçables de la couronne extérieure (6) sont portés par lesdits arceaux (17a, 17b) et sont entraînés par ces derniers lors de leur basculement vers l'arrière.

3. Tuyère selon la revendication 1, caractérisée en ce que les volets froids de la couronne extérieure (6) sont répartis en deux premières parties de volets diamétralement opposés portés par lesdits supports latéraux (16a, 16b) fixes et deux secondes parties de volets portés par lesdits arceaux (17a, 17b) et entraînés par ces derniers lors de leur basculement vers l'arrière.

4. Tuyère selon la revendication 1, caractérisée en ce que les volets froids de la couronne extérieure (6) sont articulés en amont sur un anneau (25) monté coulissant sur la structure porteuse de capotage (4).

5. Tuyère selon la revendication 4, caractérisée en ce que l'anneau (25) est coulissant vers l'amont.

6. Tuyère selon la revendication 4, caractérisée en ce que l'anneau (25) est coulissant vers l'aval.

## Patentansprüche

1. Axialsymmetrische Düse für ein Flugzeug-Turbostrahltriebwerk mit einem äußeren Kranz (6) von kalten Klappen und einem inneren Kranz (8) von heißen Klappen, wobei der innere Kranz (8) von heißen Klappen zwei in gegenseitiger Verlängerung angeordnete Gruppen (9, 10) heißer Klappen aufweist, wobei die stromaufwärtigen heißen Klappen des inneren Kranzes mit ihrem vorderen Ende (11) an einem festen Endteil (2) des Turbostrahltriebwerks angelenkt sind und die kalten Klappen des äußeren Kranzes (6) mit ihrem vorderen Ende an einer tragenden Konstruktion der Verkleidung (4) in radialem Abstand von dem genannten festen Endteil (2) angelenkt sind,
**dadurch gekennzeichnet**,
daß die stromabwärtigen heißen Klappen (10) des inneren Kranzes (8) in zwei erste einander diametral gegenüberliegende Klappeneinheiten (14a, 14b) und zwei zwischen den ersten Klappeneinheiten (14a, 14b) verschachtelte zweite Klappeneinheiten (15a, 15b), aufgeteilt sind,
daß die Klappen der ersten Klappeneinheiten (14a, 14b) mittels einer Gelenkverbindung (20) bzw. von zwei festen seitlichen Trägern (16a, 16b) getragen sind, die zwischen dem inneren Kranz (8) und dem äußeren Kranz (6) angeordnet sind,
daß die Klappen der zweiten Klappeneinheiten (15a, 15b) mittels einer Gelenkverbindung (20) von zwei Bügeln (17a, 17b) getragen sind, die an den genannten seitlichen Trägern (16a, 16b) schwenkbar montiert sind,
daß weiterhin vorgesehen sind:
a) Mittel, um das vordere Ende (12) der stromabwärtigen heißen Klappen (10) im normalen Betriebszustand des Turbostrahltriebwerks mit dem hinteren Ende der stromaufwärtigen heißen Klappen (9) in Kontakt zu halten,
b) Mittel, um die genannten Bügel (17a, 17b) und die Klappen der zweiten Klappeneinheiten (15a, 15b) zur Bildung einer Schubumkehrvorrichtung gemeinsam nach hinten zu verschwenken, wobei die Hinterkanten (22a, 22b) der Klappen der zweiten Klappeneinheiten (15a, 15b) so geschnitten sind, daß sie in der "Schubumkehrposition" den Kontakt der zweiten Klappeneinheiten (15a, 15b) und der seitlichen Ausströmöffnungen (23a, 23b) ermöglichen, die sich zwischen den stromaufwärtigen heißen Klappen (9) und den zweiten Klappeneinheiten (15a, 15b) bilden,
und daß zumindest die kalten Klappen des äußeren Kranzes (6),die den genannten Öffnungen (23a, 23b) gegenüberliegen, in der "Schubumkehrposition" zurückziehbar sind.

2. Düse nach Anspruch 1,
**dadurch gekennzeichnet**,
daß die zurückziehbaren kalten Klappen des äußeren Kranzes (6) von den genannten Bügeln (17a, 17b) getragen sind und von diesen bei ihrer Schwenkbewegung nach hinten mitgenommen werden.

3. Düse nach Anspruch 1,
**dadurch gekennzeichnet**,
daß die kalten Klappen des äußeren Kranzes (6) aufgeteilt sind in zwei erste einander diametral gegenüberliegende Klappenteile, die von den festen seitlichen Trägern (16a, 16b) getragen sind, und zwei zweite Klappenteile, die von den Bügeln (17a, 17b) getragen sind und von diesen bei ihrer Schwenkbewegung nach hinten mitgenommen werden.

4. Düse nach Anspruch 1,
**dadurch gekennzeichnet**,
daß die kalten Klappen des äußeren Kranzes (6) auf der stromaufwärtigen Seite an einem Ring (25) angelenkt sind, der an der tragenden Konstruktion der Verkleidung (4) verschiebbar montiert ist.

5. Düse nach Anspruch 4,
**dadurch gekennzeichnet**,
daß der Ring (25) zur stromaufwärtigen Seite hin verschiebbar ist.

6. Düse nach Anspruch 4,
**dadurch gekennzeichnet**,
daß der Ring (25) zur stromabwärtigen Seite hin verschiebbar ist.

## Claims

1. Convergent/divergent axisymmetric nozzle for an aviation turbojet engine, the said nozzle including an outer circle (6) of cold flaps and an inner circle (8) of hot flaps, the said inner circle (8) of hot flaps comprising two groups (9,10) of hot flaps aligned with each other, the upstream hot flaps of the inner circle being articulated at their anterior end (11) on a stationary terminal part (2) of the turbojet engine, the cold flaps of the outer circle (6) being articulated at their anterior end to a bearing cowling structure (4) which is radially distant from the stationary terminal part (2), characterized
in that the downstream hot flaps (10) of the inner circle (8) are split into two first sets of flaps (14a,14b) which are diametrically opposed and into two second sets of flaps (15a,15b) which are interspersed between the said first sets of flaps (14a,14b),
in that the flaps of the said first sets of flaps (14a,14b) are borne by means of an articulated link (20) respectively by two stationary lateral supports (16a,16b) arranged between the inner circle (8) and the outer circle (6),
in that the flaps of the said second sets of flaps (15a 15b) are borne by means of an articulated link (20) by two arched members (17a,17b) pivot-mounted on the said lateral supports (16a,16b),
and in that there are furthermore provided,
a) means for keeping the anterior end (12) of the downstream hot flaps (10) in contact with the rear end of the upstream hot flaps (9) when the turbojet engine is running under normal conditions,
b) means for pivoting the said arched members (17a,17b) and the flaps of the said second sets of flaps (15a,15b) backwards together so as to form a thrust reverser, the trailing edges (22a,22b) of the flaps of the said second sets of flaps (15a,15b) having cutouts so as to allow contact between the said second sets of flaps (15a,15b) in the "thrust reversal" position and lateral exhaust openings (23a,23b) formed between the upstream hot flaps (9) and the said second sets of flaps (15a,15b), and
in that at least the cold flaps of the outer circle (6) which are situated facing the said openings (23a,23b) can be retracted in the "thrust reversal" position.

2. Nozzle according to Claim 1, characterized in that the retractable cold flaps of the outer circle (6) are borne by the said arched members (17a,17b) and are driven by these when they pivot backwards.

3. Nozzle according to Claim 1, characterized in that the cold flaps of the outer circle (6) are split into two first parts of flaps which are diametrically opposed and borne by the said stationary lateral supports (16a,16b) and two second parts of flaps which are borne by the said arched members (17a,17b) and driven by these when they pivot backwards.

4. Nozzle according to Claim 1, characterized in that the cold flaps of the outer circle (6) are articulated upstream on a ring (25) mounted so that it can slide on the bearing cowling structure (4).

5. Nozzle according to Claim 4, characterized in that the ring (25) can slide in the upstream direction.

6. Nozzle according to Claim 4, characterized in that the ring (25) can slide in the downstream direction.
